# FASCICULE DE BREVET EUROPEEN

(11) **EP 2 321 201 B1**
(45) Date de publication et mention de la délivrance du brevet: **29.02.2012**
(21) Numéro de dépôt: 09797470.3
(22) Date de dépôt: 08.07.2009
(51) Int. Cl.: B65D 85/804, A23F 5/12, A23F 3/32, A23F 5/38

(54) **DOSETTE POUR LA PRÉPARATION DE BOISSON À INFUSER ET PROCÉDÉ DE FABRICATION DE LA DOSETTE**
PAD ZUR ZUBEREITUNG EINES AUFZUBRÜHENDEN GETRÄNKS UND VERFAHREN ZUR HERSTELLUNG DES PADS
POD FOR PREPARING A BEVERAGE TO BE INFUSED AND METHOD FOR MAKING SAID POD

(30) Priorité: 18.07.2008 FR 0854910
(43) Date de publication de la demande: 18.05.2011
(73) Titulaire: Compagnie Méditerranéenne des Cafés, 06510 Carros (FR)
(72) Inventeur: BLANC, Jean-Pierre, 06000 Nice (FR)
(74) Mandataire: Decobert, Jean-Pascal
(86) Numéro de dépôt international: PCT/EP2009/058694
(87) Numéro de publication internationale: WO 2010/006979

(56) Documents cités:
- EP-A- 0 229 920
- EP-A- 1 977 651
- WO-A-03/079821
- WO-A-2007/009600
- FR-A- 2 879 175
- GB-A- 588 354
- GB-A- 861 845
- GB-A- 191 316 178
- JP-A- 2001 128 619
- US-A1- 2001 006 695

## Description

La présente invention concerne un procédé de fabrication d'une dosette pour la préparation de boisson à infuser, ladite dosette et un dispositif de préparation de boisson à infuser à partir de ladite dosette.

L'invention trouvera son application pour la préparation de boisson à infuser dans des dispositifs destinés à la réception de la dosette.

On connaît dans le domaine des dosettes de café ou de thé préemballées, des dosettes à base de papier filtre. Ce type de dosette doit être suremballé par une protection, le plus souvent en matière plastique pour préserver le café moulu, ou le thé, de l'air, de l'eau et de la lumière.

Ces dosettes présentent l'inconvénient d'augmenter la quantité de déchets produits.

Une proposition pour remédier au problème des déchets issus de l'utilisation des doses suremballées est proposée par la demande de brevet FR-A-2 879 175 qui divulgue une dose de café moulu qui ne nécessite pas d'emballage, que ce soit filtre ou suremballage.

La dose est donc compactée en vue d'une augmentation de la cohésion du café moulu.

Cette dose présente cependant des inconvénients notamment concernant sa tenue qui n'est pas très élevée. Ainsi, la dosette a tendance à s'effriter, notamment en surface. Cette perte de matière est gênante tant au stockage qu'au cours de sa manipulation.

GB 16178 décrit une dosette contenant du café moulu et du sucre fondue comme composant de structurant.

WO 2007/00960 concerne un précurseur de boisson sous la forme d'un bloc comprenant un extrait de plante (telle que du thé, du café ou des solides de coco) et une ou plusieurs inclusions insolubles (tel qu'un fruit ou une feuille).

Il existe donc le besoin de proposer un procédé pour la fabrication de doses de matière à infuser qui permette d'obtenir des doses plus compactes et présentant une plus grande cohésion.

A cet effet, la présente invention concerne un procédé de fabrication d'une dosette contenant une substance à infuser pour la préparation de boisson comprenant au moins en partie un composant structurant et consistant en un traitement par variation de température. La présente invention est telle que définie dans les revendications.

Le procédé comprend au moins une étape où la matière à infuser est, au moins partie, mélangée ou recouverte d'un composant structurant placé à une température supérieure à son point de fusion. Puis, une seconde étape où l'ensemble obtenu est amené à une température inférieure au point de fusion du composant structurant permettant ainsi d'assurer la cohésion de la dosette.

Le procédé selon l'invention permet d'obtenir une dosette de matière à infuser qui présente une cohésion suffisante pour ne pas nécessiter d'emballage direct tel papier filtre, aluminium, plastique...

Avantageusement, le composant structurant est soit mélangé à au moins une partie de la matière à infuser soit disposé sur la matière à infuser de sorte à la recouvrir au moins partiellement.

De préférence, le composant structurant est à base d'eau et de manière préférée, il n'est constitué que d'eau. Ainsi, les qualités gustatives de la matière à infuser et donc de la boisson préparée ne sont pas altérées.

L'invention concerne aussi une dosette telle qu'obtenue par le procédé selon l'invention.

D'autres buts et avantages apparaîtront au cours de la description qui suit d'un mode de réalisation préféré de l'invention qui n'en est cependant pas limitatif.

Il convient de rappeler tout d'abord que l'invention concerne une dosette contenant une substance à infuser pour la préparation de boisson, caractérisé par le fait que on mélange ou on recouvre au moins une partie de la substance à infuser avec un composant structurant placé à une première température supérieure à son point de fusion ; on amène l'ensemble obtenu à une deuxième température inférieure au point de fusion du composant structurant assurant la cohésion de la dosette.

Suivant des variantes préférées mais non limitatives de l'invention, le procédé est tel que :
- on stocke la dosette à une température de stockage inférieure au point de fusion du composant structurant.
- la température de stockage est inférieure à 0° Celsius.
- on met en forme la dosette après le mélange de la substance à infuser avec le composant structurant et avant l'étape « b ».
- on met en forme la dosette avant de recouvrir la substance à infuser avec le composant structurant.
- on met en forme la dosette avant de mélanger au moins une portion de la périphérie de la substance à infuser avec le composant structurant par pulvérisation ou par injection.
- avant l'étape « a » on place la substance à infuser à une température inférieure au point de fusion du composant structurant.
- la substance à infuser est du café moulu.
- le composant structurant est à base d'eau.
- le composant structurant comprend de l'eau et des adjuvants.
- l'étape « b » est une étape de congélation.
- l'étape « b » est une étape de surgélation.

L'invention concerne aussi une dosette contenant une substance à infuser pour la préparation de boisson obtenue par le procédé décrit ci-dessus.

Selon des variantes préférées mais non limitatives, la dosette est telle que :
- elle comporte un composant structurant mélangé ou recouvrant au moins en partie une substance à infuser.
- le composant structurant est à base d'eau.
- le composant structurant comprend de l'eau et des adjuvants.
- elle comprend un renfort périphérique.

En outre, l'invention concerne l'utilisation d'une dosette obtenue par la procédé décrit ci-dessus dans un dispositif de préparation de boisson caractérisée par le fait que la boisson est préparée à une température supérieure au point de fusion du composant structurant.

Les dessins ci-joints sont donnés à titre d'exemples et ne sont pas limitatifs de l'invention. Ils représentent seulement des modes de réalisation de l'invention et permettront de la comprendre aisément.
Figure 1 : Schéma d'un premier mode de réalisation de la dosette obtenue par une première variante du procédé selon l'invention.
Figure 2 : Schéma d'un deuxième mode de réalisation de la dosette obtenue par une première variante du procédé selon l'invention.

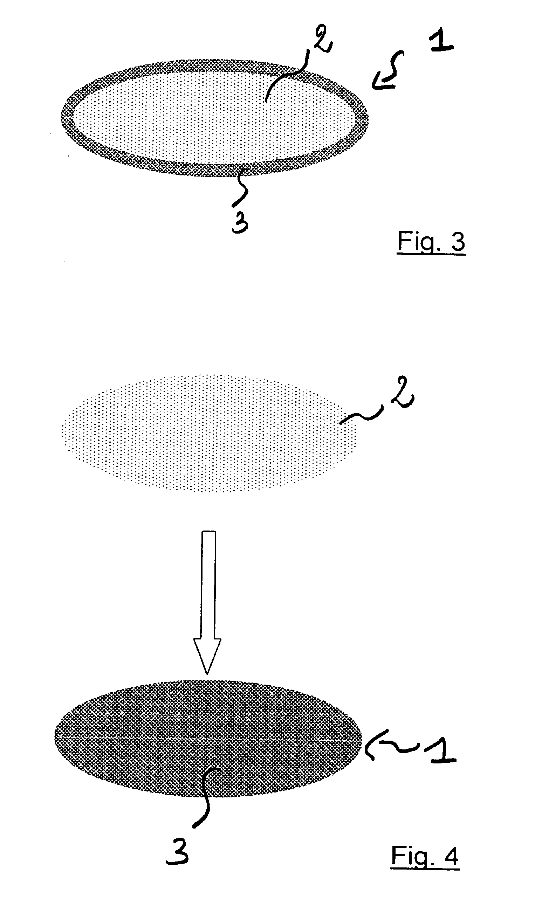

Figure 3 : Schéma d'un troisième mode de réalisation de la dosette obtenue par une première variante du procédé selon l'invention.
Figure 4 : Schéma d'un mode de réalisation de la dosette obtenue par une deuxième variante du procédé selon l'invention.

Le procédé selon l'invention comprend au moins deux étapes principales constituées par le mélange ou le recouvrement d'une substance à infuser 2 par un composant structurant puis le refroidissement de l'ensemble ainsi obtenu.

On entend par recouvrement, la formation d'une ou plusieurs couches de composant structurant à la surface de la substance à infuser 2.

On entend par mélange le fait de mêler la substance à infuser 2 et le composant structurant. Ce mélange peut notamment s'opérer par agitation (les composants sont mixés) ou par diffusion (le composant structurant imbibe la substance à infuser 2 ou s'insère dans les interstices que la substance à infuser 2 préserve.)

Le composant structurant est un composant qui a deux états physiques distincts selon sa température. A une première température supérieure à son point de fusion, le composant structurant est dans un état liquide permettant la fabrication selon le procédé de l'invention. A une deuxième température inférieure à son point de fusion, le composant structurant est dans un état solide permettant la cohésion de la dosette 1.

Le procédé selon l'invention est tel que
- lors de l'étape de mélange ou de recouvrement de la substance à infuser 2, le composant structurant se trouve à une première température tel qu'il soit à l'état liquide, facilitant le mélange ou le recouvrement de la substance à infuser 2.
- lors de la deuxième étape, la baisse de température est telle qu'elle permet la solidification du composant structurant. Cette solidification permet de former une dosette 1 qui ait une bonne cohésion.

Pour maintenir cette cohésion, le composant structurant doit être maintenu dans un état solide, la dosette 1 doit donc être stockée à une température de stockage inférieure au point de fusion du composant structurant.

Ce changement d'état du composant structurant est réversible. Ainsi, lors de l'utilisation de la dosette 1 dans un dispositif de préparation de boisson, le composant structurant va passer d'une température de stockage inférieure à son point de fusion à une température supérieure à son point de fusion. Ainsi, le composant structurant va repasser à un état liquide lors de la préparation de la boisson.

Pour ce qui est du composant structurant, il est choisi pour avoir un point de fusion avantageusement compris, entre 0° et 30° Celsius et préférentiellement entre 0° et 15° Celsius, plus précisément entre 5° et 10° Celsius. Ainsi, le composant structurant se trouvera dans un état solide pour des gammes de température pouvant facilement être mises en oeuvre de manière domestique dans un réfrigérateur ou un congélateur. La dosette 1 sera donc facilement stockable à une température de stockage inférieure au point de fusion du composant structurant. Préférentiellement, la dosette est stockée au réfrigérateur. La température de stockage préférée est donc de l'ordre de 3° à 10°C, avantageusement de 4° à 8°C.

Le composant structurant est avantageusement à base d'eau.

Selon une première possibilité, le composant structurant est uniquement de l'eau. Ce composant structurant a donc un point de fusion sensiblement égal à 0° C dans les conditions normales de température et de pression. De plus, l'eau est un matériau neutre qui n'altère pas les qualités gustatives de la boisson lors de sa préparation.

Selon une autre possibilité, le composant structurant comprend de l'eau et des adjuvants y sont ajoutés. Ces adjuvants peuvent avoir différents rôles : amélioration des qualités structurantes, modification des qualités gustatives de la boisson et notamment l'obtention d'un composant structurant ayant un point de fusion plus élevé que 0° C.

L'utilisation d'un composant structurant dont le point de fusion est d'environ 15° C ou inférieur à 15° C et préférentiellement entre 5° et 10°C, permet de limiter les risques de perte de cohésion de la dosette 1 lors de l'augmentation de la température au-delà de la température de stockage, lors notamment de la manipulation de la dosette 1.

A titre d'exemple uniquement, les adjuvants peuvent être choisis parmi des sucres, des agents structurants comme la gélatine, l'agar agar, la gomme de caroube ou des polymère hydrocolloïdes.

A titre d'exemple, la substance à infuser 2 est du café moulu ou une substance végétale hachée telle que du thé.

La dosette 1 peut être de différentes formes: parallélépipédique, sphérique ou encore ovoïde. De préférence, elle a une forme en soucoupe avec une symétrie de révolution.

La dosette 1 est mise en forme avantageusement par des moules. Lors de la mise en forme de la dosette 1 ou de la substance à infuser 2, il est avantageux que l'étape de moulage comprenne une phase de compactage de la dosette 1 ou de la matière à infuser. Cette phase de compactage permet d'améliorer les propriétés de cohésion de la dosette 1.

L'abaissement de la température de l'ensemble formé par la substance à infuser 2 et le composant structurant se fait préférentiellement par les techniques de congélation ou surgélation. La surgélation est préférée notamment, dans le cas où le composant structurant est à base d'eau. En effet, la surgélation permet une solidification très rapide de l'eau et limite ainsi la détérioration de la substance à infuser 2.

A titre d'exemple, la quantité de substance à infuser 2 est de l'ordre de 5 à 8 grammes pour du café moulu.

La proportion pondérale de composant structurant mélangé à la substance à infuser 2 est, avantageusement, inférieure à 25 % du poids de l'ensemble constitué par la substance à infuser 2 et le composant structurant, et préférentiellement comprise entre 5 % et 20 %.

Selon une première variante, lorsque le composant est mélangé avec la substance à infuser 2, une certaine quantité de substance à infuser 2 nécessaire pour former une dosette 1, est mélangée dans sa totalité avec le composant structurant. Ainsi, le composant structurant et la substance à infuser 2 forment une dosette 1 homogène.

A titre d'exemple pour une quantité de matière à infuser de café moulu d'environ 6 grammes, la quantité de composant structurant est d'environ 1 gramme ce qui représente une proportion pondérale d'environ 14,5 %.

Le mélange du composant structurant à la substance à infuser 2 peut se faire de différente façon. Le composant structurant liquide peut être versé sur la substance à infuser 2 ou injecté dans le coeur de la substance à infuser 2. L'ensemble 3 est ensuite mélangé pour obtenir un ensemble homogène. Puis, l'ensemble est moulé et refroidi en dessous du point de fusion du composant structurant. Selon un mode de réalisation, les moules servent à refroidir l'ensemble de la dosette 1.

Soit, le composant structurant peut être pulvérisé sur la substance à infuser 2. Dans ce cas, la dosette 1 peut être mise en forme avant l'étape de pulvérisation.

Selon une deuxième variante, le composant structurant est mélangé à une partie seulement de la substance à infuser 2. Ainsi, seulement la périphérie de la dosette 1 sera mélangée avec le composant structurant. La dosette 1 sera constituée de deux phases : un coeur comprenant uniquement la substance à infuser 2 et un pourtour formé du mélange 3 de substance à infuser 2 et de composant structurant donnant la cohésion à la dosette 1.

Selon cette variante, le procédé doit permette au composant structurant de rester suffisamment en surface de la substance à infuser 2.

Avantageusement, l'épaisseur de la dosette 1 comprenant le mélange 3 de la substance à infuser 2 et du composant structurant est comprise entre 1 et 5 millimètres, préférentiellement de l'ordre de 2 millimètres, pour une hauteur totale de dosette 1 de 5 à 15 millimètres.

Ainsi, la substance à infuser 2 est préalablement moulée à la forme souhaitée pour la dosette 1 puis, le composant structurant est pulvérisé ou injecté sur, ou dans, la substance à infuser 2 et l'ensemble est très rapidement refroidi de sorte à atteindre une température inférieure au point de fusion du composant structurant, préférentiellement, en moins de 5 minutes à compter du début de la phase de mélange. De cette manière, le composant structurant passe rapidement à l'état solide et reste donc à la périphérie de la substance à infuser 2 sans pouvoir pénétrer le coeur de la matière à infuser.

Selon une autre possibilité la substance à infuser 2 est tout d'abord moulée puis placée à une température inférieure au point de fusion du composant structurant. Le composant structurant étant à une température supérieure à son point de fusion, il peut être pulvérisé ou injecté sur, ou dans, la substance à infuser 2 se trouvant à une température inférieure au point de fusion. L'ensemble est ensuite refroidi de sorte à abaisser la température de l'ensemble à une température inférieure au point de fusion du composant structurant.

Ces modes de réalisation permettent de solidifier rapidement le composant structurant pour éviter qu'il ne pénètre dans le coeur de la substance à infuser 2.

Cette variante est avantageuse dans le cas ou le composant structurant comprend des adjuvants qui pourraient dénaturer ou endommager la substance à infuser 2. Ainsi, seule une partie de la substance à infuser 2 est au contact du composant structurant et le coeur de la substance à infuser 2 n'est pas dénaturé.

Selon une alternative non représentée, la substance à infuser 2 est au moins en partie recouverte du composant structurant. Selon cette alternative, le composant structurant va former une couche à la périphérie de la substance à infuser 2. La dosette 1 comprendra donc deux phases : la substance à infuser 2 au coeur et une couche externe de composant structurant. La couche externe de composant structurant coopère de manière superficielle avec la surface externe de la substance à infuser 2 de sorte à donner une cohésion à l'ensemble de la dosette 1.

Selon cette variante, la substance à infuser 2 est moulée puis trempée dans un bain de composant structurant, ou le composant structurant est versé ou pulvérisé sur la substance à infuser 2. L'ensemble est ensuite rapidement refroidi de sorte à atteindre une température inférieure au point de fusion du composant structurant, avantageusement en moins de 5 minutes.

Selon l'invention, la substance à infuser 2 peut être recouverte de une ou plusieurs couches de composant structurant.

La matière à infuser peut être placée à une température inférieure au point de fusion du composant structurant avant le recouvrement par le composant structurant.

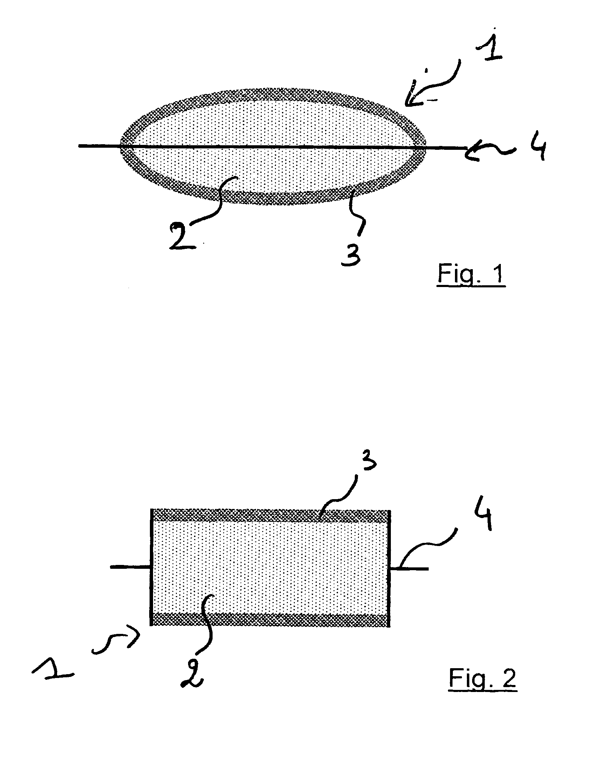

Selon l'invention, il peut être prévu que la dosette 1 comprenne un renfort périphérique 4 du type représenté aux figures 1 ou 2. Ce renfort périphérique 4 permet une facilité de manipulation de la dosette 1 et un meilleur placement dans un dispositif de préparation de boisson.

Le renfort périphérique 4 est préférentiellement à base de matériaux dégradables tel des plastiques bio dégradables ou du carton.

Le renfort périphérique 4 est intégré à la dosette 1 préférentiellement avant l'étape de mélange de la partie périphérique de la substance à infuser 2 ou de recouvrement. Si la totalité de la substance à infuser 2 est mélangée avec le composant structurant, le renfort périphérique 4 est intégré à la dosette 1 après les étapes de mélange et de refroidissement.

A l'usage, la dosette 1 ici proposée s'avère très pratique. Son stockage s'effectue en atmosphère froide (par exemple au congélateur dans le cas d'un composant structurant aqueux). Il suffit de manipuler la dosette 1 pour l'insérer dans la machine à infuser, au niveau d'une chambre d'infusion comportant un volume de réception étanche de la dosette 1 et des moyens de lixiviation (aptes à faire passer un liquide d'infusion tel de l'eau au travers de la substance à infuser 2).

Classiquement, le liquide d'infusion a une température comprise entre 80° C et 120° C si bien que le composant structurant retrouve son état liquide très rapidement. L'infusion s'effectue de manière classique. La machine à infuser peut elle-même comporter un élément de stockage à froid des dosettes. Il peut s'agir d'un compartiment réfrigéré par des moyens courant notamment par Effet Peltier.

### REFERENCES

1. Dosette
2. Substance à infuser
3. Mélange substance à infuser - composant structurant
4. Renfort périphérique

## Revendications

1. Procédé de fabrication d'une dosette (1) contenant une substance à infuser (2) pour la préparation de boisson, **caractérisé par le fait que**
a) on mélange ou on recouvre au moins une partie de la substance à infuser (2) avec un composant structurant placé à une première température supérieure à son point de fusion ;
b) on amène l'ensemble obtenu à une deuxième température inférieure au point de fusion du composant structurant assurant la cohésion de la dosette (1) ; le point de fusion du composant structurant est inférieur à 15° Celsius, la substance à infuser étant du café moulu.

2. Procédé selon la revendication 1 dans lequel le point de fusion du composant structurant est compris entre 0° et 15° Celsius.

3. Procédé selon la revendication 1 ou 2 dans lequel le point de fusion du composant structurant est compris entre 5° et 10° Celsius.

4. Procédé selon l'une quelconque des revendications 1 à 3 dans lequel on stocke la dosette (1) à une température de stockage inférieure au point de fusion du composant structurant.

5. Procédé selon la revendication 4 dans lequel la température de stockage est inférieure à 0° Celsius.

6. Procédé selon l'une quelconque des revendications 4 à 5 dans laquelle on stocke la dosette dans un réfrigérateur ou un congélateur.

7. Procédé selon l'une quelconque des revendications 4 à 6 dans lequel la température de stockage est comprise entre 4° et 8° Celsius.

8. Procédé selon une quelconque des revendications précédentes dans lequel on met en forme la dosette (1) après le mélange de la substance à infuser (2) avec le composant structurant et avant l'étape « b ».

9. Procédé selon une quelconque des revendications 1 à 7 dans lequel on met en forme la dosette (1) avant de recouvrir la substance à infuser (2) avec le composant structurant.

10. Procédé selon une quelconque des revendications 1 à 7 dans lequel on met en forme la dosette (1) avant de mélanger au moins une portion de la périphérie de la substance à infuser (2) avec le composant structurant (3) par pulvérisation ou par injection.

11. Procédé selon la revendication 9 ou 10 dans lequel avant l'étape « a » on place la substance à infuser (2) à une température inférieure au point de fusion du composant structurant.

12. Procédé selon une quelconque des revendications précédentes dans lequel le composant structurant est à base d'eau.

13. Procédé selon une quelconque des revendications précédentes dans lequel le composant structurant comprend de l'eau et des adjuvants.

14. Procédé selon une quelconque des revendications précédentes dans lequel l'étape « b » est une étape de congélation.

15. Procédé selon une quelconque des revendications 1 à 14 dans lequel l'étape « b » est une étape de surgélation.

16. Dosette (1) contenant une substance à infuser (2) pour la préparation de boisson **caractérisée par le fait qu'**elle est fabriquée par le procédé selon une quelconque des revendications 1 à 15, la substance à infuser étant du café moulu.

17. Dosette (1) selon la revendication 16 comportant un composant structurant mélangé ou recouvrant au moins en partie une substance à infuser (2).

18. selon une quelconque des revendications 16 à 17 dans laquelle le composant structurant est à base d'eau.

19. Dosette (1) selon une quelconque des revendications 16 à 18 dans laquelle le composant structurant comprend de l'eau et des adjuvants.

20. Dosette (1) selon une quelconque des revendications 16 à 19 comprenant un renfort périphérique (4).

21. Utilisation d'une dosette (1) obtenue par le procédé selon l'une quelconque des revendications 1 à 15 dans un dispositif de préparation de boisson **caractérisée par le fait que** la boisson est préparée à une température supérieure au point de fusion du composant structurant.

## Claims

1. A method for manufacturing a pod (1) containing a substance to be infused (2) for preparing beverages, **characterised in that**
a) at least one part of the substance to be infused (2) is mixed with or covered by a structuring component at a first temperature that is above its melting point;
b) the assembly obtained is brought to a second temperature which is below the melting point of the structuring component and ensures the cohesion of pod (1); the melting point of the structuring component is below 15°C, the substance to be infused being ground coffee.

2. Method according to claim 1 wherein the melting point of the structuring component is between 0° and 15°C.

3. Method according to claim 1 or 2 wherein the melting point of the structuring component is between 5° and 10°C.

4. Method according to any one of claims 1 to 3 wherein pod (1) is stored at a storage temperature below the melting point of the structuring component.

5. Method according to claim 4 wherein the storage temperature is below 0°C.

6. Method according to any one of claims 4 to 5, wherein the pod is stored in a refrigerator or freezer.

7. Method according to claims 4 to 6 wherein the storage temperature is between 4° and 8°C.

8. Method according to any one of the above claims wherein pod (1) is shaped after mixing substance to be infused (2) with the structuring component and before passing onto stage "b".

9. Method according to any one of claims 1 to 7 wherein pod (1) is shaped before covering the substance to be infused (2) with the structuring component.

10. Method according to any one of claims 1 to 7 wherein pod (1) is shaped before mixing at least one part of the periphery of the substance to be infused (2) with structuring component (3) by spraying or by injection.

11. Method according to claim 9 or 10 wherein prior to stage "a" substance to be infused (2) is brought to a temperature below the melting point of the structuring component.

12. Method according to any one of the above claims wherein the structuring component is water-based.

13. Method according to any one of the above claims wherein the structuring component includes water and additives.

14. Method according to any one of the preceding claims wherein stage "b" is a freezing stage.

15. Method according to any one of claims 1 to 14 wherein stage "b" is a deep freezing stage.

16. Pod (1) containing a substance to be infused (2) for the preparation of beverages, **characterised in that** it is manufactured using a process according to any one of claims 1 to 15, the substance to be infused being ground coffee.

17. Pod (1) according to claim 16 comprising a structuring component mixed with or covering at least part of the substance to be infused (2).

18. Pod (1) according to any one of claims 16 to 17 wherein the structuring component is water-based.

19. Pod (1) according to any one of claims 16 to 18 wherein the structuring component includes water and additives.

20. Pod (1) according to any one of claims 16 to 19 which includes peripheral reinforcing material (4).

21. Use of a pod (1) obtained by the method according to any one of claims 1 to 15 in a device for preparing beverages **characterised in that** the beverage is prepared at a temperature above the melting point of the structuring component.

## Patentansprüche

1. Herstellungsverfahren einer Dosette (1), die eine zu brühende Substanz (2) zur Herstellung eines Getränks enthält, **gekennzeichnet dadurch, dass**
a) die zu brühende Substanz (2) zumindest teilweise mit einer strukturierenden Komponente, die zunächst eine Temperatur oberhalb ihres Schmelzpunkts hat, gemischt, oder von ihr überdeckt wird,
b) dass die erhaltene Kombination auf eine zweite Temperatur gebracht wird, die unterhalb des Schmelzpunkts der strukturierenden Komponente liegt und den Zusammenhalt mit der Dosette (1) gewährleistet, wobei der Schmelzpunkt der strukturierenden Komponente unter 15° Celsius liegt und die zu brühende Substanz gemahlener Kaffee ist.

2. Verfahren gemäß Patentanspruch 1, bei dem der Schmelzpunkt der strukturierenden Komponente zwischen 0° und 15° Celsius liegt.

3. Verfahren gemäß Patentanspruch 1 oder 2, bei dem der Schmelzpunkt der strukturierenden Komponente zwischen 5° und 10° Celsius liegt.

4. Verfahren gemäß einem der Patentansprüche 1 bis 3, bei dem die Dosette (1) bei einer Lagertemperatur unterhalb des Schmelzpunkts der strukturierenden Komponente gelagert wird.

5. Verfahren gemäß Patentanspruch 4, bei dem die Lagertemperatur unter 0° Celsius liegt.

6. Verfahren gemäß einem der Patentansprüche 4 bis 5, bei dem die Dosette in einem Kühlschrank oder einem Gefrierschrank gelagert wird.

7. Verfahren gemäß einem der Patentansprüche 4 bis 6, bei dem die Lagertemperatur zwischen 4° und 8° Celsius liegt.

8. Verfahren gemäß einem der vorstehenden Patentansprüche, bei dem die Dosette (1) nach dem Mischen der zu brühenden Substanz (2) mit der strukturierenden Komponente, vor dem Schritt "b" in Form gebracht wird.

9. Verfahren gemäß einem der Patentansprüche 1 bis 7, bei dem die Dosette (1) nach dem Überdecken der zu brühenden Substanz (2) mit der strukturierenden Komponente in Form gebracht wird.

10. Verfahren gemäß einem der Patentansprüche 1 bis 7, bei dem die Dosette (1) vor dem Mischen zumindest eines Teils der Peripherie der zu brühenden Substanz (2) mit der strukturierenden Komponente durch Sprühen oder Einspritzen in Form gebracht wird.

11. Verfahren gemäß Patentanspruch 9 oder 10, bei dem die zu brühende Substanz (2) vor dem Schritt "a" auf eine Temperatur unterhalb des Schmelzpunktes der strukturierenden Komponente gebracht wird.

12. Verfahren gemäß einem der vorstehenden Patentansprüche mit einer strukturierenden Komponente auf Wasserbasis.

13. Verfahren gemäß einem der vorstehenden Patentansprüche bei dem die strukturierende Komponente Wasser und Zusatzstoffe besitzt.

14. Verfahren gemäß einem der vorstehenden Patentansprüche, bei dem im Schritt "b" ein Tiefkühlen erfolgt.

15. Verfahren gemäß einem der Patentansprüche 1 bis 14, bei dem im Schritt "b" ein Schockgefrieren erfolgt.

16. Dosette (1), die eine zu brühende Substanz (2) zur Getränkeherstellung enthält, **gekennzeichnet dadurch, dass** sie gemäß dem in einem der Patentansprüche 1 bis 15 bezeichneten Verfahren hergestellt wird, wobei die zu brühende Substanz gemahlener Kaffee ist.

17. Dosette (1) gemäß Patentanspruch 16 mit einer strukturierenden Komponente, die mit einer zu brühenden Substanz (2) gemischt ist, oder diese zumindest teilweise überdeckt.

18. Dosette (1) gemäß einem der Patentansprüche 16 bis 17, mit einer strukturierenden Komponente auf Wasserbasis.

19. Dosette (1) gemäß einem der Patentansprüche 16 bis 18, bei der die strukturierende Komponente Wasser und Zusatzstoffe enthält.

20. Dosette (1) gemäß einem der Patentansprüche 16 bis 19 mit einer peripheren Verstärkung (4).

21. Verwendung einer mit dem Verfahren gemäß einem der Patentansprüche 1 bis 15 hergestellten Dosette (1) in einer Vorrichtung zur Getränkeherstellung, **gekennzeichnet dadurch, dass** das Getränk bei einer Temperatur oberhalb des Schmelzpunktes der strukturierenden Komponente zubereitet wird.
